# EUROPÄISCHE PATENTSCHRIFT

(11) **EP 0 552 392 B1**
(45) Veröffentlichungstag und Bekanntmachung des Hinweises auf die Patenterteilung: **27.03.1996**
(21) Anmeldenummer: 92101016.1
(22) Anmeldetag: 22.01.1992
(51) Int. Cl.: G07F 7/10, H04L 9/32

(54) **Verfahren zur gegenseitigen Authentifikation einer Chipkarte und eines Terminals**
Method for mutual authentification of an IC-card and a terminal
Méthode pour l'authentification mutuelle d'une carte à circuit intégré et un terminal

(43) Veröffentlichungstag der Anmeldung: 28.07.1993
(73) Patentinhaber: Siemens Nixdorf Informationssysteme Aktiengesellschaft, D-33102 Paderborn (DE)
(72) Erfinder: Hewel, Harald, Dipl.-Ing., W-8890 Aichach (DE); Gefrörer, Stanislaus, Dipl.-Math., W-8028 Taufkirchen (DE); Kruse, Dietrich Dipl.-Ing., W-8012 Ottobrunn (DE)
(74) Vertreter: Fuchs, Franz-Josef, Dr.-Ing.

(56) Entgegenhaltungen:
- EP-A- 0 388 700
- EP-A- 0 400 441
- GB-A- 2 144 564
- GB-A- 2 227 111
- IT INFORMATIONSTECHNIK Bd. 32, Nr. 1, Februar 1990, München, Seiten 64-67, XP000095908; G. KUNDE et al.: 'Der neue Flughafen München - Sicherheit durch Chipkarten'

## Beschreibung

Die Erfindung betrifft ein Verfahren zur gegenseitigen Authentifikation einer Chipkarte und eines Terminals nach der Challenge- and Response-Methode (Frage-Antwort-Verfahren). Üblicherweise authentifiziert sich zunächst die Chipkarte gegenüber dem Terminal. Die Chipkarte überträgt ihre Chipkartenidentitätsnummer zum Terminal. Dieses berechnet aus der Chipkartenidentitätsnummer einen ersten Terminalschlüssel, der bei Verwendung symmetrischer Verschlüsselungsalgorithmen mit einem ersten in der Chipkarte gespeicherten Chipkartenschlüssel identisch ist. Nun generiert das Terminal eine erste Zufallszahl, überträgt sie zur Chipkarte und das Terminal verschlüsselt die erste Zufallszahl ebenso wie die Chipkarte. Als Verschlüsselungsergebnis liegt sowohl in der Chipkarte als auch im Terminal ein erster Anerkennungsparameter vor. Diese beiden Anerkennungsparameter werden im Terminal verglichen. Bei positivem Vergleichsergebnis ist die Chipkarte authentisch.

Zur Authentifikation des Terminals gegenüber der Chipkarte findet der oben beschriebene Vorgang mit vertauschten Rollen statt. Der bereits beiden Partnern bekannte erste Schlüssel wird zur beiderseitigen Verschlüsselung einer von der Chipkarte generierten Zufallszahl verwendet. Die dabei entstehenden zweiten Anerkennungsparameter werden in der Chipkarte verglichen. Bei positivem Vergleichsergebnis ist auch das Terminal authentisch (EP-A-0 388 700 und IT Informationstechnik, Bd. 32, Nr. 1, Februar 1990, München Seiten 64 - 67, XP000095908 G. Kunde, D. Kruse 'Der neue Flughafen München - Sicherheit durch Chipkarten').

Die Chipkarte erhält damit zwar Gewißheit darüber, ob das Terminal, mit dem sie verbunden ist, authentisch ist. Die Chipkarte erhält aber keine Kenntnis darüber, um welches von vielen möclichen Terminals es sich handelt. Dieses Informationsdefizit könnte zwar zum Beispiel durch das Übertragen einer Terminal-nummer zur Chipkarte beseitigt werden, jedoch kann eine solche Informationsübertragung zu Sicherheitdefiziten, z.B. durch Offenbarung der Identitätskenngröße an Dritte, führen. Der Benutzer der Chipkarte kann sich von der Authentizität des Terminals nicht selbst überzeugen, denn der Benutzer erhält entweder keine oder nur eine subjektive Information darüber, daß die Authentizitätsprüfung erfolgreich verlaufen ist.

Die der vorliegenden Erfindung zugrundeliegende Aufgabe ist es, eine sichere Identifikation aller sicherheitsrelevanten Elemente eines Terminals gegenüber einer Chipkarte zu ermöglichen und darüberhinaus dem Benutzer der Chipkarte die Möglichkeit zu geben, sich objektiv von der Authentizität des Terminals zu überzeugen.

Diese Aufgabe wird erfindungsgemäß durch die im Patentanspruch 1 angegebenen Merkmale gelöst.

Gemäß dem im Patentanspruch 1 angegebenen Verfahren wird die bzw. werden die Identitätskenngrößen, die dem Terminal T zugeordnet sind, in den gegenseitigen Authentifikationsprozeß gemäß der Challenge- and Response-Methode mit einbezogen. Es wird nicht nur ein chipkartenspezifischer Schlüssel verwendet, sondern dieser chipkartenspezifische Schlüssel wird zur Generierung eines zweiten terminal- und chipkartenspezifischen Schlüssels verwendet. Damit ist eine eindeutige und sichere Identifikation inklusive einer Authentifikation aller Elemente des Terminals gewährleistet, deren Kenngrößen Bestandteil der zur Chipkarte übertragenen Identitätskenngröße sind.

Bei Übereinstimmen der ersten und der zweiten Anerkennungsparameter werden die dem Terminal zugeordneten Identitätskenngrößen und/oder eine diese Identitätskenngrößen repräsentierende Information optisch und/oder akustisch angezeigt. Diese Anzeige erfolgt auf einer Anzeigeeinheit. Diese Anzeigeeinheit kann ein Lautsprecher, eine Flüssigkristallanzeige oder ähnliches sein.

Durch eine solche Anzeige kann sich der Chipkartenbenutzer selbst davon überzeugen, daß das Terminal weder manipuliert noch simuliert ist. Erleichtert wird dies dem Benutzer dann, wenn die die Identitätskenngrößen repräsentierende Information ein Wort ist, das eindeutig der oder den Identitätskenngrößen zugeordnet ist. Die Vertrauenswürdigkeit des Terminals wird durch die Anzeige für den Chipkartenbenutzer nachgewiesen.

Gemäß einer weiteren Weiterbildung der Erfindung muß das angezeigte Ergebnis quittiert werden. Diese Quittierung erfolgt beispielsweise durch einen Tastendruck oder durch Ablauf einer hinreichend langen Zeit.

Gemäß einer Ausgestaltung und Weiterbildung der Erfindung ist im Terminal ein Sicherheitsmodul integriert, dessen Sicherheitsidentitätskenngröße gemeinsam mit einer Terminalidentitätskenngröße zur Chipkarte übertragen wird. Diese beiden Identitätskenngrößen bilden die dem Terminal zugeordnete Identitätskenngröße. Die Chipkarte erhält damit auch eine gesicherte und authentische Information darüber, welches Sicherheitsmodul aktuell im Terminal integriert ist.

Gemäß einer weiteren Weiterbildung der Erfindung wird gemeinsam mit der dem Terminal zugeordneten Identitätskenngröße eine Anwendungsidentitätksenngröße zur Chipkarte übertragen. Die Identitätskenngröße wird also um eine Anwendungsidentitätskenngröße erweitert. Damit ist es der Chipkarte auch möglich, die im Terminal laufende Anwendung im Zusammenhang mit der Chipkarte eindeutig zu identifizieren und deren Authentizität zu überprüfen.

Gemäß einer weiteren Weiterbildung und Ausgestaltung der Erfindung wird vom Zeitpunkt der Übertragung bzw. der Eingabe einer Personenkennzahl aus bzw. in das Terminal jegliche Anzeige auf Seiten des Terminals verhindert. Diese Verhinderung jeglicher Anzeige wird erst nach Anzeige der Identitätskenngrößen und/oder der diese Identitätskenngrößen repräsentierenden Information wieder aufgehoben. Damit kann also von Seiten des Terminals bis zur Feststellung der Authentizität durch die Chipkarte die Anzeigeeinheit des Terminals nicht aktiviert werden. Eine Anzeige manipulierter Informationen ist somit wirksam verhindert.

Gemäß einer weiteren Ausgestaltung und Weiterbildung der Erfindung werden die zwischen Chipkarte und Terminal auszutauschenden Daten über ein zwischen Chipkarte und Terminal angeordnetes Chipkartenterminal geleitet. Die dem Terminal zugeordneten Identitätskenngrößen und/oder eine diese Identitätskenngrößen repräsentierende Information wird mit Hilfe der auf dem Chipkartenterminal angeordneten Anzeigeeinheit angezeigt. Diese Anzeige wird durch eine benutzerseitige Betätigung der auf dem Chipkartenterminal angeordneten Tastatur quittiert. Durch diese Ausgestaltung und Weiterbildung der Erfindung wird auf Grund der räumlichen Trennung von Chipkartenterminal und Terminal ein zusätzlicher Schutz vor einer Manipulation der Anzeigeeinheit des Terminals erreicht. Das Chipkartenterminal kann zusätzlich von der Chipkarte aufgefordert werden sich unabhängig vom Terminal selbst gegenüber der Chipkarte zu authentisieren. Durch diese zusätzliche Möglichkeit wird deutlich, daß das Chipkartenterminal sicherheitstechnisch gesehen der Chipkarte zugeordnet ist. Das Chipkartenterminal wirkt dabei vor allem als vertrauenswürdige Schnittstelle zwischen Chipkarte und Chipkartenbenutzer. Die gleiche Vertrauenswürdigkeit ist bei einer Integration der Funktionen des Chipkartenterminals im Terminal nur mit großem Aufwand erreichbar.

Gemäß einer weiteren Weiterbildung und Ausgestaltung der Erfindung wird vor jeder gegenseitigen Authentifikation der Chipkarte und des Terminals eine Überprüfung der eingegebenen Personenkennzahl durchgeführt. Damit ist gewährleistet, daß eine Anzeige an der Anzeigeeinheit während des Verfahrens zur gegenseitigen Authentifikation von Chipkarte und Terminal stets verhindert ist, auch wenn die Chipkarte für mehrere verschiedene Anwendungen geeignet ist. Daraus folgt zwar, daß eine globale Prüfung der Personenkennzahl für mehrere Anwendungen nicht möglich ist. Dieser Nachteil wird aber durch den Gewinn an Sicherheit mehr als aufgewogen.

Weitere vorteilhafte Ausgestaltungen und Weiterbildungen sind in weiteren Unteransprüchen angegeben. Im folgenden wir die Erfindung anhand der Zeichnung näher erläutert. Dabei zeigen:
- FIG 1: das erfindungsgemäße Ablaufdiagramm gemäß der Challenge- and Response-Methode,
- FIG 2: eine schematisch dargestellte Anordnung einer Chipkarte, eines Chipkartenterminals und eines Zentralrechners, und
- FIG 3: eine Anordnung gemäß FIG 2, bei der das Chipkartenterminal mit einer Rechnerstation in einem Terminal integriert ist.

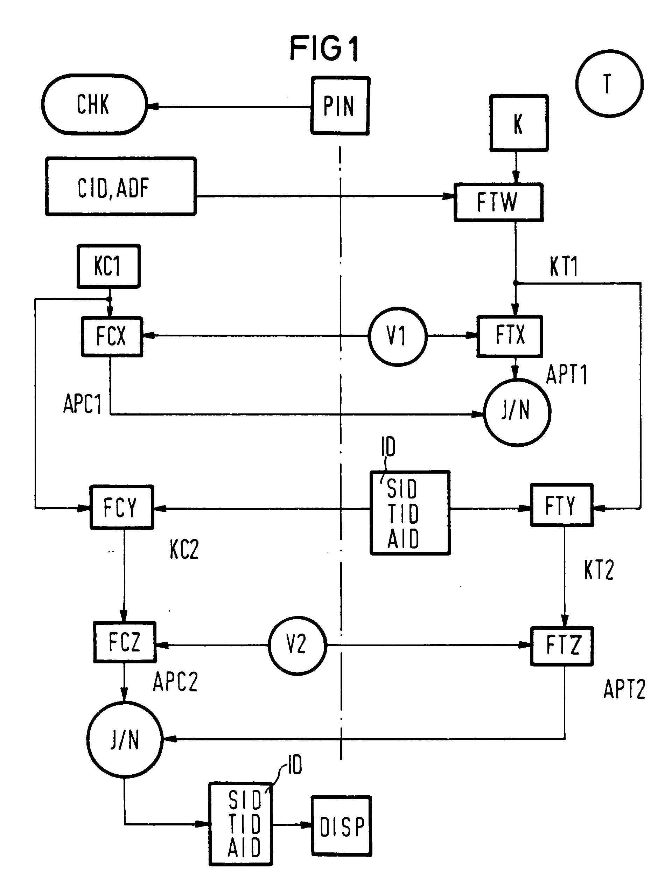

Im folgenden Ausführungsbeispiel wird das erfindungsgemäße Verfahren, wie es in Figur 1 dargestellt ist, beschrieben. Als Kommunikationspartner werden dabei ein Terminal T und eine Chipkarte CHK verwendet. Das Terminal T umfaßt dabei sämtliche Einheiten außerhalb der Chipkarte CHK. Solche Einheiten sind beispielsweise ein Chipkartenterminal CKT, ein Zentralrechner HOST, eine Rechnerstation CPU, und Leitungssysteme L.

Das Chipkartenterminal CKT bildet die Schnittstelle sowohl zwischen Chipkarte CHK und Zentralrechner HOST als auch zwischen Chipkarte CHK und Chipkartenbenutzer. Im Chipkartenterminal CKT sind eine Anzeigeeinheit DISP und ein Eingabetastenblock TAS integriert.

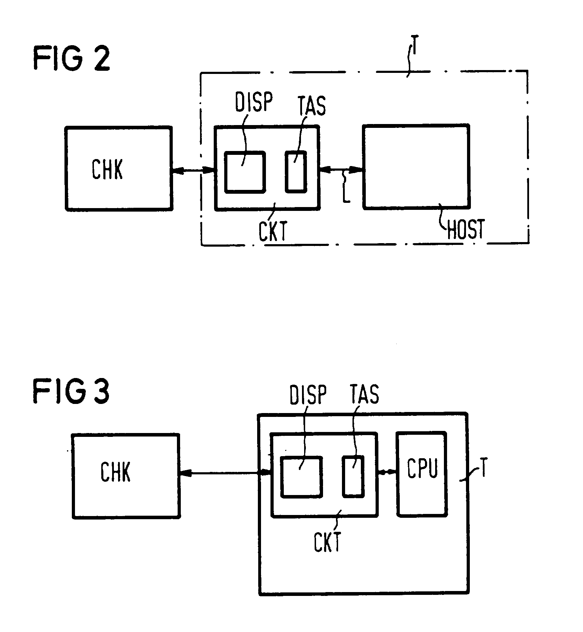

In Figur 2 ist das Chipkartenterminal CKT eine Einzeleinheit, die über das Leitungssystem L mit dem Zentralrechner HOST verbunden ist. In Figur 3 kann das Chipkartenterminal CKT sowohl eine Einzeleinheit, als auch eine Einheit sein, die gemeinsam mit der Rechnerstation CPU im Terminal T integriert ist.

In welcher räumlichen Form das Chipkartenterminal CKT auch immer vorliegt - wichtig für das erfindungsgemäße Verfahren ist die absolute Vertrauenswürdigkeit der im Chipkartenterminal CKT implementierten Einheiten, nämlich der Anzeigeeinheit DISP DISP und der Tastatur TAS.

Das Ausführungsbeispiel beschreibt die Challenge and Response-Methode bei Verwendung von symmetrischen Verschlüsselungsalgorithmen. Das erfindungsgemäße Verfahren ist jedoch ebenso mit asymmetrischen Verschlüsselungsalgorithmen durchführbar. Dazu müssen lediglich die verwendeten Funktionen und die verwendeten Schlüssel entsprechend den Anforderungen des asymmetrischen Verschlüsselungsverfahrens angepaßt werden.

In Figur 1 sind links von einer strichpunktierten Linie die Verfahrensabläufe eingetragen, die in der Chipkarte CHK ablaufen, rechts der strichpunktierten Linie sind die Verfahrensabläufe dargestellt, die im Terminal T, und dort insbesondere in einem Sicherheitsmodul ablaufen. Nach Verbinden der Chipkarte CHK mit dem Terminal T gibt ein Chipkartenbenutzer mit Hilfe des terminalseitigen Tastenfeldes TAS eine Personenkennzahl PIN ein. Nach dieser Eingabe wird jede Anzeige auf der Anzeigeeinheit DISP des Terminals T verhindert. Die Personenkennzahl PIN wird zu Vergleichszwecken zur Chipkarte CHK übertragen. Bei positivem Vergleichsergebnis überträgt die Chipkarte CHK ihre Chipkartenidentitätsnummer CID und ein die gewünschte Anwendung kennzeichnendes Applikationskommando ADF zum Terminal T. Im Terminal T wird mit Hilfe der empfangenen Daten, einem im Terminal T gespeicherten Schlüssel K und eines Algorithmus FTW ein erster Terminalschlüssel KT1 errechnet. Dieser erste Terminalschlüssel KT1 entspricht dem in der Chipkarte CHK gespeicherten ersten Chipkartenschlüssel KC1.

Im Terminal T wird eine erste Zufallszahl V1 generiert und zur Chipkarte CHK übertragen. Sowohl in der Chipkarte CHK als auch im Terminal T werden nun erste Anerkennungsparameter APC1, APT1 errechnet. Auf Seiten der Chipkarte CHK geschieht dies mit Hilfe der ersten Zufallszahl V1, des ersten Chipkartenschlüssels KC1 und einer ersten Chipkartenfunktion FCX. Die erste Chipkartenfunktion FCX entspricht einer ersten Terminalfunktion FTX.

Das Terminal T errechnet einen ersten Terminalanerkennungsparameter APT1 mit Hilfe der ersten Zufallszahl V1, des ersten Terminalschlüssels KT1 und der ersten Terminalfunktion FTX. Der von der Chipkarte CHK errechnete erste Chipkartenanerkennungsparameter APC1 wird zum Terminal T übertragen und dort mit dem ersten Terminalanerkennungsparameter APT1 verglichen. Bei negativem Vergleichsergebnis wird das Verfahren abgebrochen, da dann die Chipkarte CHK nicht authentisch ist.

Bevor nun auch die Authentizität des Terminals T gegenüber der Chipkarte CHK überprüft wird, errechnet die Chipkarte CHK einen zweiten Chipkartenschlüssel KC2 und das Terminal T einen zweiten Terminalschlüssel KT2. In der Chipkarte CHK erfolgt dies nach Übertragen von dem Terminal T zugeordneten Identitätskenngrößen ID an die Chipkarte CHK. Die Chipkarte CHK bildet aus den Identitätskenngrößen ID und dem ersten Chipkartenschlüssel KC1 mit Hilfe einer zweiten Chipkartenfunktion FCY den zweiten Chipkartenschlüssel KC2. Das Terminal T bestimmt aus den Identitätskenngrößen ID, dem ersten Terminalschlüssel KT1 und einer zweiten Terminalfunktion FTY den zweiten Terminalschlüssel KT2. Die zweite Chipkartenfunktion FCY und die zweite Terminalfunktion FTY sind identisch.

Die dem Terminal T zugeordneten Identitätskenngrößen ID sind eine Sicherheitsidentitätskenngröße SID, eine Terminalidentitätskenngröße TID und eine Anwendungsidentitätskenngröße AID. Die Sicherheitsidentitätskenngröße SID bezeichnet eindeutig ein bestimmtes Sicherheitsmodul. Die Terminalidentitätskenngröße TID bezeichnet eindeutig ein bestimmtes Terminal T. Ebenso bezeichnet die Anwendungsidentitätskenngröße AID eindeutig eine bestimmte aktuell ablaufende Anwendung. Die zweiten Schlüssel KC2, KT2 in der Chipkarte CHK und im Terminal T verändern sich demzufolge, wenn die Anwendung geändert wird, wenn ein anderes Sicherheitsmodul ins Terminal T integriert wird, oder wenn eine Verbindung mit einem anderen Terminal T erfolgt.

Bevor die Identitätskenngröße ID vom Terminal T zur Chipkarte CHK übertragen wird, kann diese Identitätskenngröße ID mit Hilfe eines "Message Authentification Code" zusätzlich gesichert werden.

Zur Authentifikation des Terminals T gegenüber der Chipkarte CHK erzeugt nun die Chipkarte CHK eine zweite Zufallszahl V2 und überträgt diese zum Terminal T. Das Terminal T berechnet mit Hilfe einer dritten Terminalfunktion FTZ, des zweiten Terminalschlüssels KT2 und der zweiten Zufallszahl V2 einen zweiten Terminalanerkennungsparameter APT2 und überträgt diesen zur Chipkarte CHK. Die Chipkarte errechnet aus dem zweiten Chipkartenschlüssel KC2, der zweiten Zufallszahl V2 und einer dritten Chipkartenfunktion FCZ einen zweiten Chipkartenanerkennungsparameter APC2. Die zweiten Anerkennungsparameter AP2 werden in der Chipkarte CHK verglichen. Bei positivem Vergleichsergebnis werden die Identitätskenngrößen ID von der Chipkarte CHK zum Terminal T übertragen und mit Hilfe der Anzeigeeinheit DISP des Terminals T angezeigt. Diese Anzeige erfolgt in Form einer die Identitätskenngrößen ID repräsentierenden Information. Dieser Information - z.B. ein bestimmtes Wort - ist eindeutig das Tripel bestehend aus Sicherheitsidentitätskenngröße SID, Terminalidentitätskenngröße TID und Anwendungsidentitätskenngröße AID zugeordnet. Erkennt der Chipkartenbenutzer dieses Wort als richtig an, dann ist für ihn das Terminal T objektiv authentisch.

Die Bekanntgabe des Ergebnisses der Authentizitätsprüfung kann jedoch auch unmittelbar durch die Chipkarte CHK erfolgen. Voraussetzung dafür ist, daß die Chipkarte über eine Anzeigeeinheit DISP, wie z.B. Leuchtdioden, einen akustischen Signalgeber, der beispielsweise bestimmte Tonfolgen abzugeben vermag oder eine Flüssigkristallanzeige verfügt.

Mit der Anzeige der die Identitätskenngrößen ID repräsentierenden Information wird die Anzeigeeinheit DISP wieder für die Anzeige anderer Informationen freigegeben. Ist eine Quittierung der angezeigten Identitätskenngrößen ID durch den Chipkartenbenutzer vorgesehen, dann erfolgt die Freigabe der Anzeigeeinheit DISP erst nach dieser Quittierung.

## Patentansprüche

1. Verfahren zur gegenseitigen Authentifikation einer Chipkarte und eines Terminals mittels folgender Schritte:
- die Chipkarte überträgt zumindest eine Chipkartenidentifikationsnummer (CID) zum Terminal (T)
- das Terminal (T) bestimmt aus der Chipkartenidentifikationsnummer (CID) einen ersten Terminalschlüssel (KT1)
- die Chipkarte (CHK) bzw. das Terminal (T) berechnet aus einem ersten Chipkartenschlüssel (KC1) bzw. dem ersten Terminalschlüssel (KT1) und einer ersten Zufallszahl (V1) mit Hilfe einer ersten Chipkartenfunktion (FCX) bzw. einer ersten Terminalfunktion (FTX) einen ersten Chipkartenanerkennungsparameter (APC1) bzw. einen ersten Terminalanerkennungsparameter (APT1)
- die Chipkarte (CHK) überträgt den ersten Chipkartenanerkennungsparameter (APC1) zum Terminal (T), wo die beiden ersten Anerkennungsparameter (APC1,APT1) miteinander verglichen werden
- das Terminal (T) überträgt bei positivem Vergleichsergebnis mindestens eine dem Terminal (T) zugeordnete Identitätskenngröße (ID) zur Chipkarte (CHK)
- die Chipkarte (CHK) bzw. das Terminal (T) berechnet aus dem ersten Chipkartenschlüssel (KC1) bzw. aus dem ersten Terminalschlüssel (KT1) und der Identitätskenngröße (ID) mit Hilfe einer zweiten Chipkartenfunktion (FCY) bzw. einer zweiten Terminalfunktion (FTY) einen zweiten Chipkartenschlüssel (KC2) bzw. einen zweiten Terminalschlüssel (KT2)
- die Chipkarte (CHK) bzw. das Terminal (T) berechnet aus dem zweiten Chipkartenschlüssel (KC2) bzw. aus dem zweiten Terminalschlüssel (KT2) und einer zweiten Zufallszahl (V2) mit Hilfe einer dritten Chipkartenfunktion (FCZ) bzw. einer dritten Terminalfunktion (FTZ) einen zweiten Chipkartenanerkennungsparameter (APC2) bzw. einen zweiten Terminalanerkennungsparameter (APT2)
- das Terminal (T) überträgt den zweiten Terminalanerkennungsparameter (APT2) zur Chipkarte (CHK), wo die beiden zweiten Anerkennungsparameter (APC2,APT2) miteinander verglichen werden und
- bei Übereinstimmen der ersten und der zweiten Anerkennungsparameter (APC1, APT1, APC2, APT2) werden die dem Terminal (T) zugeordneten Identitätskenngrößen (ID) und/oder eine diese Identitätskenngrößen (ID) repräsentierende Information optisch und/oder akustisch mit Hilfe einer Anzeigeeinheit (DISP) angezeigt.

2. Verfahren nach Anspruch 1,
**dadurch gekennzeichnet,** daß im Terminal (T) der erste Terminalschlüssel (KT1) mit Hilfe eines Algorithmus (FTW) aus der Chipkartenidentifikationsnummer (CID) und einem Schlüssel (K) berechnet wird.

3. Verfahren nach einem der vorhergehenden Ansprüche,
**dadurch gekennzeichnet,** daß die Anzeige der Identitätskenngrößen (ID) und/oder der diese Identitätskenngrößen (ID) repräsentierenden Information auf Seiten des Terminals (T), insbesondere auf der Anzeigeeinheit (DISP) eines Chipkartenterminals (CKT), erfolgt.

4. Verfahren nach einem der vorhergehenden Ansprüche,
**dadurch gekennzeichnet,** daß die Richtigkeit der angezeigten Identitätskenngrößen (ID) und/oder der die Identitätskenngrößen (ID) repräsentierenden Information quittierbar ist.

5. Verfahren nach einem der vorhergehenden Ansprüche, bei dem vor einer Übertragung der Chipkartenidentifikationsnummer (CID) zum Terminal (T) vom Terminal (T) eine von einem Chipkartenbenutzer in das Terminal (T), insbesondere in eine Tastatur (TAS) eines Chipkartenterminals (CKT), eingegebene Personenkennzahl (PIN) zu einem Vergleich zur Chipkarte (CHK) übertragen wird,
**dadurch gekennzeichnet,** daß mit der Übertragung bzw. der Eingabe der Personenkennzahl (PIN) jegliche Anzeige der Anzeigeeinheit (DISP) auf Seiten des Terminals (T) , insbesondere des Chipkartenterminals (CKT), verhindert wird und daß nach Anzeige der Idenitiätskenngrößen (ID) und/oder der diese Identitätskenngrößen (ID) repräsentierenden Information die Verhinderung der Anzeige auf Seiten des Terminals (T) aufgehoben wird.

6. Verfahren nach Anspruch 5, **dadurch gekennzeichnet,** daß erst nach Quittieren der Richtigkeit der angezeigten Identitätskenngrößen (ID) und/oder der die Identitätskenngrößen (ID) repräsentierenden Information die Verhinderung der Anzeige auf Seiten des Terminals (T), insbesondere des Chipkartenterminals (CKT), aufgehoben wird.

7. Verfahren nach einem der vorhergehenden Ansprüche, **dadurch gekennzeichnet,** daß im Terminal (T) ein Sicherheitsmodul integriert ist, dessen Sicherheitsidentitätskenngröße (SID) gemeinsam mit einer Terminalidentitätskenngröße (TID) zur Chipkarte übertragen wird.

8. Verfahren nach einem der vorhergehenden Ansprüche, **dadurch gekennzeichnet,** daß gemeinsam mit der Sicherheitsidentitätskenngröße (SID) und der Terminalidentitätskenngröße (TID) eine Anwendungsidentitätskenngröße (AID) zur Chipkarte (CHK) übertragen wird.

9. Verfahren nach einem der Ansprüche 4 bis 8,
**dadurch gekennzeichnet,** daß die zwischen Chipkarte (CHK) und Terminal (T) auszutauschenden Daten über ein zwischen Chipkarte (CHK) und Terminal (T) angeordnetes Chipkartenterminal (CKT) geleitet werden, daß die dem Terminal (T) zugeordneten Identitätskenngrößen (ID) und/oder eine diese Identitätskenngrößen (ID) repräsentierende Information mit Hilfe der auf dem Chipkartenterminal (CKT) angeordneten Anzeigeeinheit (DISP) angezeigt werden und daß die Anzeige durch eine benutzerseitige Betätigung einer auf dem Chipkartenterminal (CKT) angeordneten Tastatur (TAS) quittiert wird.

10. Verfahren nach einem der Ansprüche 5 bis 9, **dadurch gekennzeichnet,** daß vor jeder gegenseitigen Authentifikation der Chipkarte (CHK) und des Terminals (T) eine Überprüfung der eingegebenen Personenkennzahl (PIN) erfolgt.

## Claims

1. Method for mutual authentication of a chip card and a terminal by means of the following steps:
- the chip card transmits at least one chip card identification number (CID) to the terminal (T)
- the terminal (T) determines from the chip card identification number (CID) a first terminal code (KT1)
- the chip card (CHK) or the terminal (T) calculates from a first chip card code (KC1) or the first terminal code (KT1) and a first random number (V1) with the aid of a first chip card function (FCX) or a first terminal function (FTX) a first chip card acknowledgement parameter (APC1) or a first terminal acknowledgement parameter (APT1)
- the chip card (CHK) transmits the first chip card acknowledgement parameter (APC1) to the terminal (T), where the two first acknowledgement parameters (APC1, APT1) are compared with each other
- in the case of a positive comparison result, the terminal (T) transmits at least one identity characteristic (ID), assigned to the terminal (T), to the chip card (CHK)
- the chip card (CHK) or the terminal (T) calculates from the first chip card code (KC1) or from the first terminal code (KT1) and the identity characteristic (ID) with the aid of a second chip card function (FCY) or a second terminal function (FTY) a second chip card code (KC2) or a second terminal code (KT2)
- the chip card (CHK) or the terminal (T) calculates from the second chip card code (KC2) or from the second terminal code (KT2) and a second random number (V2) with the aid of a third chip card function (FCZ) or a third terminal function (FTZ) a second chip card acknowledgement parameter (APC2) or a second terminal acknowledgement parameter (APT2)
- the terminal (T) transmits the second terminal acknowledgement parameter (APT2) to the chip card (CHK), where the two second acknowledgement parameters (APC2, APT2) are compared with each other and
- if the first and the second acknowledgement parameters (APC1, APT1, APC2, APT2) match, the identity characteristics (ID) assigned to the terminal (T) and/or an information item representing these identity characteristics (ID) is indicated optically and/or acoustically with the aid of a display unit (DISP).

2. Method according to Claim 1, characterized in that in the terminal (T) the first terminal code (KT1) is calculated with the aid of an algorithm (FTW) from the chip card identification number (CID) and a code (K).

3. Method according to one of the preceding claims, characterized in that the indication of the identity characteristics (ID) and/or of the information item representing these identity characteristics (ID) takes place on the terminal (T) side, in particular on the display unit (DISP) of a chip card terminal (CKT).

4. Method according to one of the preceding claims, characterized in that the correctness of the indicated identity characteristics (ID) and/or of the information item representing the identity characteristics (ID) is acknowledgeable.

5. Method according to one of the preceding claims, in which, before a transmission of the chip card identification number (CID) to the terminal (T), a personal identification number (PIN), entered by a chip card user into the terminal (T), in particular into a keyboard (TAS) of a chip card terminal (CKT), is transmitted from the terminal (T) to the chip card (CHK) for a comparison, characterized in that the transmission or the entry of the personal identification number (PIN) has the effect of preventing any indication on the display unit (DISP) on the terminal (T) side, in particular the chip card terminal (CKT), and in that the prevention of the indication on the terminal (T) side is lifted after indication of the identity characteristics (ID) and/or of the information item representing these identity characteristics (ID).

6. Method according to Claim 5, characterized in that the prevention of the indication on the terminal (T) side, in particular the chip card terminal (CKT), is lifted only after acknowledging the correctness of the indicated identity characteristics (ID) and/or of the information item representing the identity characteristics (ID).

7. Method according to one of the preceding claims, characterized in that in the terminal (T) there is integrated a security module, the security identity characteristic (SID) of which is transmitted together with a terminal identity characteristic (TID) to the chip card.

8. Method according to one of the preceding claims, characterized in that an application identity characteristic (AID) is transmitted together with the security identity characteristic (SID) and the terminal identity characteristic (TID) to the chip card (CHK).

9. Method according to one of Claims 4 to 8, characterized in that the data to be exchanged between chip card (CHK) and terminal (T) are passed via a chip card terminal (CKT) arranged between chip card (CHK) and terminal (T), in that the identity characteristics (ID) assigned to the terminal (T) and/or an information item representing these identity characteristics (ID) are indicated with the aid of the display unit (DISP) arranged on the chip card terminal (CKT) and in that the indication is acknowledged by an actuation on the user side of a keyboard (TAS) arranged on the chip card terminal (CKT).

10. Method according to one of Claims 5 to 9, characterized in that a check of the entered personal identification number (PIN) takes place before each mutual authentication of the chip card (CHK) and the terminal (T).

## Revendications

1. Procédé d'authentification mutuelle d'une carte à puce et d'un terminal, à l'aide des étapes suivantes :
- la carte à puce transmet au terminal (T) au moins un numéro d'identification de carte à puce (CID),
- le terminal (T) détermine, à partir du numéro (CID) d'identification de la carte à puce, un premier code (KT1) du terminal,
- la carte à puce (CHK) ou le terminal (T) calcule, à partir d'un premier code (KC1) de la carte à puce ou du premier code (KT) pour le terminal et d'un premier nombre aléatoire (V1), et ce à l'aide d'une première fonction (FCX) de la carte à puce ou d'une première fonction (FTX) du terminal, un premier paramètre (APC1) d'identification de la carte à puce ou un premier paramètre (APT1) d'identification du terminal,
- la carte à puce (CHK) transmet le premier paramètre (APC1) d'identification de la carte à puce au terminal (T), dans lequel les deux premiers paramètres d'identification (APC1, APT1) sont comparés entre eux,
- lorsque le résultat de la comparaison est positif, le terminal (T) transmet une grandeur caractéristique d'identification (ID), associée au terminal (T), à la carte à puce (CHK),
- la carte à puce (CHK) ou le terminal (T) calcule, à partir du premier code (KC1) de la carte à puce ou à partir du premier code (KT1) du terminal et de la grandeur caractéristique d'identité (ID), à l'aide d'une seconde fonction (FCY) ou d'une seconde fonction (FTY) du terminal, un second code (KC2) de la carte à puce ou un second code (KT2) du terminal,
- la carte à puce (CHK) ou le terminal (T) calcule, à partir du second code (KC2) de la carte à puce ou du second code (KT2) du terminal et d'un second nombre aléatoire (V2), ce à l'aide d'une troisième fonction (FCZ) de la carte à puce ou d'une troisième fonction (FTZ) du terminal, un second paramètre (KPC2) d'identification de la carte à puce ou un second paramètre (APT2) d'identification du terminal,
- le terminal (T) transmet le second paramètre (APT2) d'identification du terminal à la carte à puce (CHK), les deux seconds paramètres d'identification (APC2,APT2) étant comparés entre eux, et
- en cas de coïncidence des premier et second paramètres d'identification (APC1,APT1,APC2,APT2), les grandeurs caractéristiques d'identité (ID) associées au terminal (T) et/ou une information représentant ces grandeurs caractéristiques d'identité (ID) sont indiquées optiquement et/ou acoustiquement à l'aide d'une unité d'indication (DISP).

2. Procédé selon la revendication 1, caractérisé par le fait que dans le terminal (T), le premier code (KT1) du terminal est calculé à l'aide d'un algorithme (FTW) à partir du numéro (CID) d'identification de la carte à puce et d'un code (K).

3. Procédé selon l'une des revendications précédentes, caractérisé par le fait que l'indication des grandeurs caractéristiques d'identité (ID) et/ou de l'information représentant ces grandeurs caractéristiques d'identité (ID) s'effectue dans le terminal (T), notamment dans l'unité de l'indication (DISP) d'un terminal (CKT) de la carte à puce.

4. Procédé selon l'une des revendications précédentes, caractérisé par le fait qu'il est délivré un accusé de réception du caractère correct des grandeurs caractéristiques d'identité indiquées (ID) et/ou de l'information représentant les grandeurs caractéristiques d'identité (ID).

5. Procédé selon l'une des revendications précédentes, selon lequel avant la transmission du numéro d'identification (CID) de la carte à puce du terminal (T) au terminal (T), un numéro caractéristique personnel (PIN), introduit par un utilisateur de la carte à puce dans le terminal (T), notamment au niveau d'un clavier (TAS) d'un terminal (CKT) de la carte à puce est transmis pour une comparaison à la carte à puce (CHK),
caractérisé par le fait que lors de la transmission ou de l'introduction du numéro caractéristique de personnel (PIN), toute délivrance d'une indication de la part de l'unité d'indication (DISP) située dans le terminal (T), notamment dans le terminal (CKT) de la carte à puce, est empêchée, et qu'après l'indication des grandeurs caractéristiques d'identité (ID) et/ou de l'information représentant ces grandeurs caractéristiques d'identité (ID), le blocage de l'indication dans le terminal (T) est suspendu.

6. Procédé selon la revendication 5, caractérisé par le fait que c'est seulement après accusé de réception de l'état correct des grandeurs caractéristiques d'identité indiquées (ID) et/ou de l'information représentant les grandeurs caractéristiques d'identité (ID), que le blocage de l'indication dans le terminal (T), notamment dans le terminal (CKT) de la carte à puce est suspendu.

7. Procédé selon l'une des revendications précédentes, caractérisé par le fait que dans le terminal (T) est intégré un module de sécurité, dont la grandeur caractéristique d'identité de sécurité (SID) est transmise en commun avec une grandeur caractéristique d'identité du terminal (TID) à la carte à puce.

8. Procédé selon l'une revendications précédentes, caractérisé par le fait qu'une grandeur caractéristique d'identité d'utilisation (SID) est transmise à la carte à puce (CHK) conjointement avec la grandeur caractéristique d'identité de sécurité (SID) et avec la grandeur caractéristique d'identité du terminal (TID).

9. Procédé selon l'une des revendications 4 à 8, caractérisé par le fait que les données devant être échangées entre la carte à puce (CHK) et le terminal (T) sont envoyées par l'intermédiaire d'un terminal (CKT) de la carte à puce, qui est disposé entre la carte à puce (CHK) et le terminal (T), que les grandeurs caractéristiques d'identité (ID) associées au terminal (T) et/ou une information représentant ces grandeurs caractéristiques d'identité (ID) sont indiquées à l'aide de l'unité d'indication (DISP) disposée dans le terminal (CKT) de la carte à puce et qu'un accusé de réception de l'indication est fourni par un actionnement, côté utilisateur, d'un clavier (TAS) disposé dans le terminal (CKT) de la carte à puce.

10. Procédé selon l'une des revendications 5 à 9, caractérisé par le fait qu'un contrôle du nombre caractéristique personnel introduit (PIN) est exécuté avant chaque authentification mutuelle de la carte à puce (CHK) et le terminal (T).
